# EUROPÄISCHE PATENTANMELDUNG

(11) **EP 1 210 966 A1**
(43) Veröffentlichungstag der Anmeldung: **05.06.2002**
(21) Anmeldenummer: 01122765.9
(22) Anmeldetag: 21.09.2001
(51) Int. Cl.: B01D 39/16

(54) **Gasfiltermaterialien mit Donor- und/oder Akzeptorfunktion**

(30) Priorität: 01.12.2000 DE 10059835
(71) Anmelder: PAPIERFABRIK SCHOELLER & HOESCH GMBH & CO. KG, 76593 Gernsbach (DE)
(72) Erfinder: Blum, Horst, 76584 Gernsbach (DE); Sick, Stefan, 76534 Baden-Baden (DE); Salow, Hartmut, Dr., 76596 Forbach (DE); Kaussen, Manfred, Dr., 77833 Ottersweier (DE)
(74) Vertreter: Henkel, Feiler, Hänzel

(57) **Zusammenfassung**

Die Erfindung betrifft ein Gasfiltermaterial, das dadurch gekennzeichnet ist, dass es, bezogen auf das Flächengewicht des Gasfiltermaterials, 0,01 bis 60 Gew.-% makrocyclische organische Käfigverbindungen enthält. Dieses Gasfiltermaterial entspricht den technischen Anforderungen an Festigkeit und Porosität und ist gleichzeitig geeignet, an den Gasstrom bzw. an die von dem Gasfiltermaterial zurückgehaltenen Stäube Substanzen abzugeben (Donoreigenschaft) und/oder von den durchströmenden Gasen selektiv Stoffe aufzunehmen (Akzeptoreigenschaft).

Ferner betrifft die Erfindung ein Verfahren zur Herstellung eines solchen Gasfiltermaterials, bei dem die makrocyclischen organischen Käfigverbindungen und die ggf. geladenen Geruchsstoffe bzw. Biozide mit einem Auftragsaggregat ohne zusätzlichen Binder zusammen mit Wasser auf das Filtermaterial aufgetragen werden. Schließlich wird erfindungsgemäß die Verwendung von beladenen und/oder unbeladenen makrocyclischen organischen Käfigverbindungen bei der Herstellung von Gasfiltermaterialien in Vorschlag gebracht.

## Beschreibung

Die vorliegende Erfindung betrifft ein neues Gasfiltermaterial, welches makrocyclische organische Käfigverbindungen enthält.

Die Herstellung von Gasfiltermaterialien, wie sie beispielsweise als Innerliner (Innenbeutel) oder Outerliner (Umbeutel) von Staubsaugerbeuteln oder Gasfiltervliese Anwendung finden, ist auf dem einschlägigen Fachgebiet bekannt.

Im allgemeinen erfolgt die Herstellung eines Inner- oder Outerlinermaterials dabei aus Naturfasern oder einer Kombination von Naturfasern und synthetischen Fasern in an sich auf dem einschlägigen Fachgebiet bekannter Weise unter Verwendung einer Papiermaschine.

Dabei wird in einer ersten Stufe eine wässrige Suspension von Naturfasern und/oder synthetischen Fasern auf ein Papiermaschinensieb aufgebracht, worauf die Aufschlämmung über erste Entwässerungskammern geleitet wird. Dabei bildet sich auf dem bewegten Sieb eine erste Faserschicht aus den Naturfasern und/oder synthetischen Fasern.

Bei der Weiterbewegung des Papiermaschinensiebes wird dann eine Trocknung vorgenommen. Bei der Mitverwendung von synthetischen Fasern kann es dabei zu einem Anschmelzen der synthetischen Fasern an die Naturfasern kommen, was eine teilweise Durchdringung der Naturfasern und der synthetischen Fasern bedingen kann.

Darüber hinaus ist bekannt, dass beta-Cyclodextrine wie auch Cucurbiturile mit organischen Molekülen wie Toluol, Xylol, Naphtalin, Anilin, 2-Chlorphenol, 1,2-Dichlorbenzol, 3-Methylphenol, 1-Hexanol und Pentylamin Komplexe aus der Gasphase bilden. (D. Danz, C. Meschke, H.-J. Buschmann, "Complexation of Volatile Organic Molecules from the Gas Phase with Cucurbituril und β-Cyclodextrin" Supramolecular Chemistry, Bd. 9, S. 79-83).

Hierbei wurde festgestellt, dass beim Durchleiten von mit organischen Substanzen beladenen Gasströmen durch eine mit festem Cucurbituril bzw. beta-Cyclodextrin beladene Säule, organische Substanzen aus dem Gasstrom entfernt und gebunden werden.

Eine vergleichbare Aufnahme von organischen Substanzen bei Gasfilterpapieren und Gasfiltervliesen ist in der Literatur nicht beschrieben.

Ferner ist bekannt, dass Geruchsfilter für Staubsauger mit Aktivkohle ausgerüstet werden können, um Gerüche zu binden (DE-A-195 13 658).

Des weiteren ist es Stand der Technik, dass Staubfilterbeutel für einen Staubsauger mit einer Lage aus einem Absorptionsmaterial wie Aktivkohle oder Zeolithe, geeignet sind, Gerüche aufzunehmen. (DE-A-199 35 355, U. Heider, F. Meyer).

Eine Verwendung makrocyclischer organischer Käfigverbindungen sowie gegebenenfalls eine Speicherung von Geruchs-/Duftstoffen zur späteren Abgabe ist nicht beschrieben.

Aufgabe der vorliegenden Erfindung ist es, Gasfiltermaterialien bereitzustellen, die den technischen Anforderungen an Festigkeit und Porosität für ein Gasfiltermaterial entsprechen und gleichzeitig geeignet sind, an den Gasstrom bzw. an die von dem Gasfiltermaterial zurückgehaltenen Stäube Substanzen abzugeben (Donoreigenschaft) und/oder von den durchströmenden Gasen selektiv Stoffe aufnehmen zu können (Akzeptoreigenschaft).

Gegenstand eines ersten Aspekts der vorliegenden Erfindung ist ein Gasfiltermaterial, das dadurch gekennzeichnet ist, dass es, bezogen auf das Flächengewicht des Gasfiltermaterials, 0,01 bis 60 Gew.-% makrocyclische organische Käfigverbindungen enthält.

Bei den erfindungsgemäß eingearbeiteten makrocyclischen organischen Käfigverbindungen kann es sich um unbeladene und/oder beladene makrocyclische organische Käfigverbindungen handeln.

In einer bevorzugten Ausführungsform der vorliegenden Erfindung handelt es sich erfindungsgemäß um ein Gasfiltermaterial, das 0,01 bis 60 Gew.-% makrocyclische organische Käfigverbindungen enthält, wobei ein Teil der eingearbeiteten makrocyclischen organischen Käfigverbindungen unbeladen ist und der Rest der makrocyclischen organischen Käfigverbindungen mit Substanzen beladen sind, die aus Geruchsstoffen, Duftstoffen und Bioziden ausgewählt sind.

Der Anteil der beladenen makrocyclischen organischen Käfigverbindungen beträgt dabei erfindungsgemäß üblicherweise 1 bis 99 %, zweckmäßigerweise 3 bis 80 % und vorzugsweise 5 bis 30 % der gesamten im Gasfiltermaterial vorhandenen makrocyclischen organischen Käfigverbindungen. So beträgt folglich der Anteil der unbeladenen makrocyclischen organischen Käfigverbindungen üblicherweise 99 bis 1 %, zweckmäßigerweise 97 bis 20 % und vorzugsweise 95 bis 70 % der gesamten im Gasfiltermaterial vorhandenen makrocyclischen organischen Käfigverbindungen.

Die Gesamtmenge der auf bzw. in dem Gasfiltermaterial enthaltenen makrocyclischen organischen Käfigverbindungen beträgt erfindungsgemäß üblicherweise 0,01 bis 60 Gew.-%, zweckmäßigerweise 0,1 bis 40 Gew.-% und vorzugsweise 1 bis 15 Gew.-%, bezogen auf das Flächengewicht des Gasfiltermaterials.

Das erfindungsgemäße Gasfiltermaterial weist üblicherweise ein Flächengewicht zwischen 8 und 100 g/m² , zweckmäßigerweise 10 bis 70 g/m² und vorzugsweise ein Flächengewicht zwischen 12 und 30 g/m² auf.

Das erfindungsgemäße Gasfiltermaterial kann wie oben ausgeführt, aus Naturfasern und/oder synthetischen Fasern bestehen. Bei den Naturfasern kann es sich beispielsweise um solche aus Nadelholzzellstoff und/oder Abacafasern handeln.

In einer speziellen Ausführungsform kann es sich bei dem Gasfiltermaterial um ein zweilagiges (zwei Schichten), heißsiegelfähiges Material handeln. In solchen Fällen besteht üblicherweise die erste Schicht hauptsächlich, d.h. zu mindestens 60 Gew.-%, aus Naturfasern. Gewöhnlich macht die erste Schicht 60 bis 90 Gew.-% des Flächengewichts des fertigen Gasfiltermaterials aus. Bei einem heißsiegelfähigen Gasfiltermaterial kann erfindungsgemäß eine hautsächlich, d.h. zu mindestens etwa 60 Gew.-%, aus siegelfähigen Polymerfasern bestehende zweite Schicht auf die erste Schicht aufgebracht werden. Üblicherweise macht die zweite Schicht 10 bis 40 Gew.-% des Flächengewichts des fertigen Gasfiltermaterials aus.

Bei den in den Gasfiltermaterialien enthaltenen makrocyclischen Käfigverbindungen kann es sich, wie oben ausgeführt, um beladene und/oder unbeladene makrocyclische organische Käfigverbindungen handeln.

Beispielsweise können die makrocyclischen organischen Käfigverbindungen mit Materialien beladen sein, die eine biozide Eigenschaft besitzen, so dass das Wachstum von Pilzen und Bakterien an der Oberfläche des Gasfiltermaterials bzw. in den von dem Gasfiltermaterial zurückgehaltenen Stäuben inhibiert werden kann.

Durch das Einbringen einer Kombination von unbeladenen und beladenen makrocyclischen organischen Käfigverbindungen in ein erfindungsgemäßes Gasfiltermaterial können somit unangenehme Geruchstoffe, die sich im zuströmenden Gasstrom befinden bzw. durch Zersetzungsprozesse in den durch das Gasfiltermaterial abgeschiedenen Filterstäuben entstehen, aus dem durch das Filtermedium tretenden Luftstrom entfernt werden.

Durch eingearbeitete, mit beispielsweise Duft- und/oder Geruchsstoffen beladene makrocyclische organische Käfigverbindungen in den erfindungsgemäßen Gasfiltermaterialien können in den Luftstrom angenehme Geruchs/-Duftstoffe abgegeben werden und dabei negative Gerüche des durchtretenden Luftstroms überlagert werden.

Beim Einbringen von Bioziden mittels mit Bioziden beladener makrocyclischer organischer Käfigverbindungen kann das Wachstum von Pilzen und Bakterien auf dem Gasfiltermaterial selbst inhibiert werden. Gleichfalls kann eine allmähliche Abgabe der in den macrocyclischen organischen Käfigverbindungen gespeicherten Biozide in den Luftstrom erfolgen und damit das Wachstum von Pilzen und Bakterien in der Filteranlage inhibiert werden.

Somit ist es erfindungsgemäß möglich, mit den erfindungsgemäßen Gasfiltermaterialien, wie sie beispielsweise in Staubsaugerfilterbeuteln und Staubsaugerabgasfiltern und als Gasfiltermaterialien in Klimaanlagen Verwendung finden können, bei einer Ausrüstung der erfindungsgemäßen Gasfiltermaterialien mit beladenen oder unbeladenen makrocyclischen organischen Käfigverbindungen den Geruch in Räumen zu verbessern bzw. eine Freisetzung von negativen Gerüchen zu verringern oder ganz zu verhindern.

So können erfindungsgemäß als Geruchsstoffe und/oder Duftstoffe Riech- und Aromastoffe der Substanzklassen cyclische und acyclische Terpenverbindungen, Cycloaliphaten, aromatische Verbindungen, Phenole/Phenolderivate, O-Herterocyclen, N- und S-Heterocyclen, ätherische Öle und tierische Sekrete, wie sie beispielsweise bei Ullmann, Encyclopädie der Technischen Chemie, S.201 bis 285, Band 20, 4. neubearbeitete Auflage, Verlag Chemie Weinheim 1981 beschrieben sind.

Bevorzugte zur Verwendung gemäß der vorliegenden Erfindung verwendete Duft- und/oder Geruchsstoffe zur Überlagerung negativer Gerüche sind synthetische und natürliche Duftstoffe wie beispielweise Anisyl-aceton, Benzaldehyd, Terpineol (1-Methyl-4-iso-propyl-l-cyclohexen-8-ol), Terpinylacetat (para-Ment-l-en-8-il-acetat), Ethylvanillin, Citrusöl, Grapefruit-Terpene oder Orangen-Terpene oder andere ätherische Öle.

Bei den erfindungsgemäß verwendeten Bioziden zur Verhinderung des Pilzwachstums auf dem Gasfiltermaterial und Inhibierung der mikrobiellen Zersetzung von Stäuben handelt es sich beispielsweise um Gemische von 5-Chloro-2-Methyl-4-isothiazolin-3-on bzw. 2-Methyl-4-isothiazolin-3-on wie sie im Markt erhältlich sind, oder um 5-Chloro-(2,4-dichlorophenoxy)-phenol, deren biozide Wirksamkeit durch den Hersteller bewiesen und in den Produktmerkblättern (siehe Produktmerkblätter Lonza Group) eingehend beschrieben wird.

Bei den erfindungsgemäß verwendeten makrocyclischen Käfigverbindungen handelt es sich um die auf dem einschlägigen Fachgebiet bekannten geeigneten makrocyclischen organischen Käfigverbindungen, wie Asterane, Basketen, Bullvalene, Congressane, Cubane, Cucurbiturile, Cyclodextrine, Diamantane, Diademane, Tetrahedrane, Dodecahedrane, Fullerene, Prismane oder Pentaprismane.

Vorzugsweise werden erfindungsgemäß als makrocyclische organische Käfigverbindungen Cyclodextrine und/oder Cucurbiturile verwendet.

Bei den erfindungsgemäß verwendbaren Cyclodextrinen kann es sich um die auf dem einschlägigen Fachgebiet bekannten Cyclodextrine handeln (vgl. beispielsweise WO 97/33044, Seiten 12 bis 19).

Cyclodextrine sind von ihrer chemischen Natur her cyclische Oligosaccharide aus mindestens 5, über α(1→4)-Bindungen verknüpfte Glucopyranose-Einheiten. Obwohl Cyclodextrine mit bis zu 12 Glucopyranose-Einheiten bekannt sind, werden in den meisten Fällen α-, β- oder γ-Cyclodextrine mit 6, 7 bzw. 8 Glucopyranose-Einheiten verwendet.

So werden erfindungsgemäß bevorzugt α-, β- oder γ-Cyclodextrine oder ein beliebiges Gemisch hiervon verwendet. In einer speziell bevorzugten Ausführungsform gemäß der vorliegenden Erfindung handelt es sich bei den verwendeten Cyclodextrinen um β- und/oder γ-Cyclodextrine. Für den erfindungsgemäßen Einsatzzweck eignen sich neben den underivatisierten Cyclodextrinen auch deren Derivate, von denen beispielsweise Trimethyl-beta-cyclodextrin, Dimethylbeta-cyclodextrin, Hydroxyethyl-beta-cyclodextrin und/oder Hydroxypropyl-beta-cyclodextrin speziell bevorzugt sind.

Bei den erfindungsgemäß verwendbaren Cucurbiturilen handelt es sich um eine aus Harnstoff, Glyoxal und Formaldehyd dargestellten Substanzklasse macrocyclischer Moleküle( siehe-Buschman, H.J., Treatment of Wastewaters from textile processing", Kolloquium an der Technischen Universität Berlin, Sonderforschungsbereich 193, Berlin 1997).

Bei der Synthese wird ein Gemisch aus Ringen der Ringgröße 5 bis 11 erhalten. So wird erfindungsgemäß bevorzugt ein Gemisch mit hohem Anteil an Cucurbit-6-uril eingesetzt.

Bei den erfindungsgemäßen Gasfiltermaterialien kann es sich um Gasfiltervliese, Gasfilterpapiere, Staubsaugerbeutel oder Gasfiltereinsätze handeln.

Im folgenden wird das einen weiteren Aspekt der vorliegenden Erfindung darstellende Verfahren zur Herstellung des erfindungsgemäßen Gasfiltermaterials beschrieben. Zur Veranschaulichung wird dabei das erfindungsgemäße Verfahren anhand von beigefügten Figuren am Beispiel eines zweilagigen Gasfiltermaterials näher erläutert, obwohl gegenwärtig auf dem einschlägigen Fachgebiet in der Regel einlagige Gasfiltermaterilaien hergestellt werden.

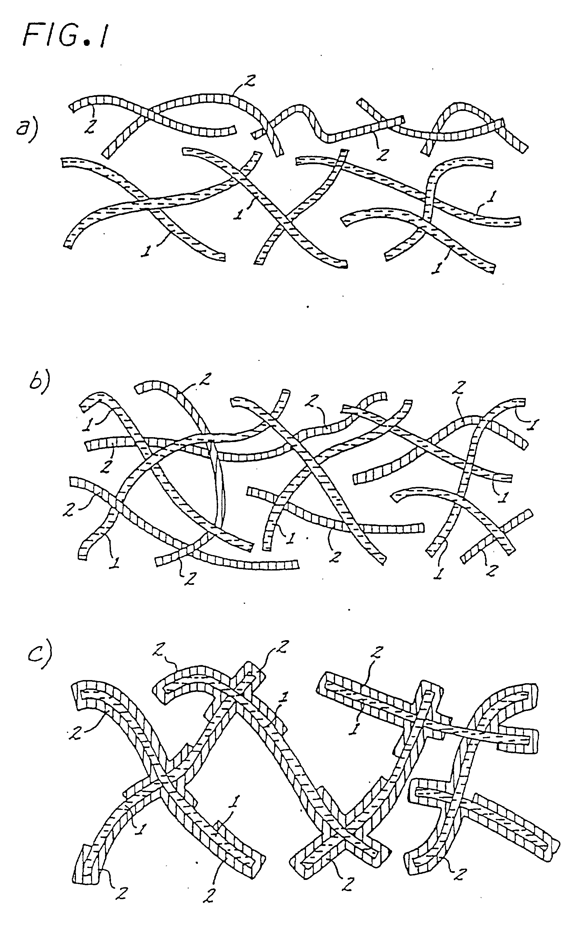

Fig. 1 zeigt die verschiedenen Stadien bei der Bildung des erfindungsgemäßen Gasfiltermaterials aus Naturfasern und synthetischen Fasern am Beispiel der Verwendung einer Papiermaschine in einer allgemeinen, grob schematischen Darstellung.

In Fig. 1 ist in einer schematischen Darstellung die Bildung des erfindungsgemäßen Gasfiltermaterials gezeigt. Dabei ist in Fig. la) die Bildung einer ersten Faserschicht aus Naturfasern 1 und die Bildung einer zweiten Faserschicht mit synthetischen, biologisch abbaubaren heißsiegelbaren Fasern 2 dargestellt. Die Bildung der zweiten Schicht mit den Fasern 2 erfolgt also durch Ablagerung über der ersten Schicht, welche durch die Naturfasern 1 gebildet ist. In der Zeichnung sind zur Unterscheidung die Naturfasern 1 waagerecht schraffiert, während die synthetischen Fasern 2 annähernd senkrecht schraffiert wurden.

Fig. 1b) zeigt, wie durch die beschriebene Entwässerung der beiden Schichten, insbesondere der zweiten Schicht mit den Fasern 2, eine teilweise Durchdringung der beiden Schichten erzielt wird, so dass die synthetischen Fasern 2 zwischen die Naturfasern 1 gelangen.

In einem weiteren Herstellungsschritt werden die einander teilweise durchdringenden Schichten 1 und 2 getrocknet und dabei derart erhitzt, dass die synthetischen Fasern 2 schmelzen und sich bei der Wiederverfestigung so um die Fasern 1 legen, dass diese zumindest teilweise umhüllt werden. Das Gasfiltermaterial ist somit heißsiegelfähig geworden (Fig. 1c).

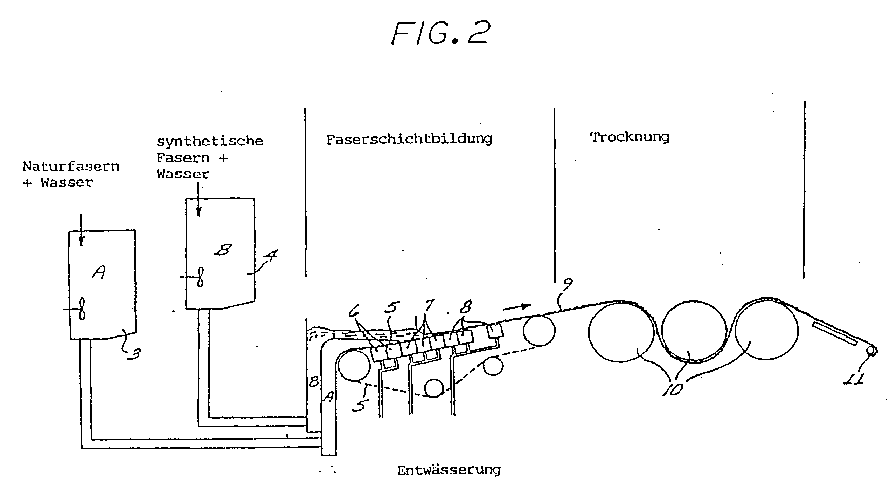

Fig. 2 zeigt den grundsätzlichen Aufbau einer Papiermaschine, wie sie zur Herstellung eines erfindungsgemäßen Gasfiltermaterials verwendet werden kann. Zunächst wird aus den gemahlenen Naturfasern, gegebenenfalls einem Anteil anderer Fasern und Wasser eine Suspension A hergestellt. Diese Suspension A kann gemäß einer Ausführungsform der vorliegenden Erfindung ferner beladene und/oder unbeladene Moleküle makrocyclischer organischer Käfigverbindungen in der oben angegebenen Menge umfassen. Dazu können die beladenen und/oder unbeladenen makrocyclischen organischen Käfigverbindungen gegebenenfalls zusammen mit den zu verwendenden Beladungssubstanzen üblicherweise ohne zusätzlichen Binder in die Suspension A eingetragen werden.

Ferner wird eine Suspension B hergestellt, die gegebenenfalls einen Anteil Naturfasern, heißsiegelfähige Polymerfasern und Wasser umfasst. In einer weiteren Ausführungsform der vorliegenden Erfindung kann auch diese Suspension B entweder zusätzlich zur Suspension A oder statt dessen beladene und/oder unbeladene makrocyclische organische Käfigverbindungen gemäß den obigen Ausführungen umfassen.

Diese beiden Suspensionen A und B werden aus den jeweiligen Behältern (3 und 4) über den sogenannten Stoffauflauf (head box) der Papiermaschine zugeführt. Diese besitzt im wesentlichen ein umlaufendes Sieb (5), welches über eine Anzahl von Entwässerungskammern (6, 7 und 8) hinweggeführt wird.

Über geeignete Rohrleitungen und Pumpvorrichtungen, die nicht näher dargestellt sind, wird die Suspension A auf das Sieb 5, über den ersten beiden Entwässerungskammern 6, geleitet, wobei durch die Kammern 6 und die Entwässerungsleitung das Wasser abgesaugt wird. Dabei bildet sich auf dem bewegten Sieb 5 eine erste Faserschicht aus den Naturfasern 1. Bei der Weiterbewegung des Siebes 5 über die Entwässerungskammern 7 wird die zweite Suspension B zugeführt, wobei über den Entwässerungskammern 7 die zweite Schicht aus synthetischen Fasern auf der ersten Schicht abgelagert wird. Die Entwässerung erfolgt dabei über die Entwässerungsleitung. Bei der Weiterbewegung des Siebes 5 mit den beiden aufeinanderliegenden Faserschichten wird über die Entwässerungskammern 8 eine Entwässerung vorgenommen, wodurch die beiden Schichten einander teilweise durchdringen. Durch entsprechende Einstellung der Entwässerung kann die Durchdringung mehr oder weniger stark sein.

Das nunmehr gebildete Material 9 aus Naturfasern und synthetischen Fasern wird von dem Sieb abgenommen und einer Trocknung zugeführt. Diese Trocknung kann auf verschiedene Art und Weise erfolgen, z. B. durch Kontakttrocknung oder Durchströmtrocknung.

Die Elemente 10 geben nur grob schematisch den Hinweis auf entsprechende Trocknungselemente.

In Fig. 2 sind 3 Trockenzylinder 10 gezeichnet, über die die geformte Papierbahn im Kontaktverfahren getrocknet wird. Es ist jedoch auch praktikabel, die gebildete Papierbahn nur über einen Zylinder zu führen und sie mit heißer Luft zu trocknen, ohne dass die Bahn auf diesem Zylinder aufliegt.

Die Erwärmung des zweischichtigen Fasermaterials bringt die synthetischen Fasern 2 in der Mischschicht 9 zum Schmelzen. Bei der Wiederverfestigung am Ausgang der Trockenstation umhüllen die synthetischen Fasern zumindest teilweise die Naturfasern und das heißsiegelfähige Gasfiltermaterial wird auf eine Rolle 11 aufgerollt.

Um das Gasfiltermaterial im Rahmen des erfindungegemäßen Verfahrens mit beladenen und/oder unbeladenen makrocyclischen organischen Käfigverbindungen zu beaufschlagen, bieten sich also während des Produktionsprozesses verschiedene Verfahrensstufen als Zugabeort der makrocyclischen organischen Käfigverbindungen an:
1) Die Zugabe der makrocyclischen organischen Käfigverbindungen kann beispielsweise in der Masse vor dem Stoffauflauf der Papiermaschine erfolgen. Hierbei können beladene und/oder unbeladene makrocyclische organische Käfigverbindungen und die Ladung bildende Beladungssubstanzen getrennt dem Stoffauflauf zugesetzt werden.
2) Ferner kann die Zugabe der Beladungssubstanzen und/oder der unbeladenen makrocyclischen organischen Käfigverbindungen in der Leimpresse (wäßrige Lösung, Emulsion, Dispersion) während des Produktionsprozesses erfolgen.
3) Des weiteren besteht die Möglichkeit der Zugabe im Rahmen weiterer Verfahrensstufen, z.B. beim Sprühbalken oder bei der Befeuchtungseinrichtung am Ende des Produktionsprozesses. Dies gilt in gleicher Weise auch für die Beladung der makrocyclischen organischen Käfigverbindungen mit Beladungssubstanzen. Üblicherweise werden die markrocyclischen organischen Käfigverbindungen und/oder die Beladungssubstanzen hierbei ohne Mitverwendung von Wasser auf das Trägermaterial aufgebracht.

Hierbei gilt ferner, dass die Beladung der makrocyclischen organischen Käfigverbindungen mit den Beladungssubstanzen über das in einfacher Weise ermittelbare Molverhältnis einfach und genau eingestellt werden kann.

Die nachträgliche Beladung von mit unbeladenen makrocyclischen organischen Käfigverbindungen beaufschlagten Gasfiltermaterialien kann beispielsweise durch eine im Markt erhältliche Klimakammer unter Sättigung des Gasraumes mit der zur Beladung vorgesehenen organischen Substanz erfolgen.

Weiterer Gegenstand der vorliegenden Erfindung ist somit ein Verfahren zur Herstellung der erfindungsgemäßen Gasfiltermaterialien, bei dem nach dem oben allgemein beschriebenen Verfahren hergestellte Gasfiltermaterialien nachträglich mit Geruchs-, Duftstoffen und/oder bioziden Wirkstoffen beladen werden.

Die nachträgliche Beladung der erfindungsgemäßen Gasfiltermaterialien kann dabei beispielsweise in einer Klimakammer mit einer mit Geruchs/Duftstoffe gesättigten Atmosphäre erfolgen.

Weiterer Gegenstand der vorliegenden Erfindung ist die Mitverwendung von beladenen und/oder unbeladenen makrocyclischen Käfigverbindungen bei der Herstellung von Gasfiltermaterialien gemäß den obigen Ausführungen.

Bei den Beladungssubstanzen handelt es sich erfindungsgemäß um die oben beschiebenen Substanzen, die aus Geruchsstoffen, Duftstoffen und/oder Bioziden ausgewählt sind.

Gegenstand einer bevorzugten Ausführungsform ist die Mitverwendung eines Gemisches aus beladenen und unbeladenen Substanzen bei der Herstellung von Gasfiltermaterialien.

Gegenstand einer weiteren bevorzugten Ausführungsform ist die Mitverwendung von unbeladenen makrocyclischen Käfigverbindungen bei der Herstellung von Gasfiltermaterialien gemäß den obigen Ausführungen, wobei in einem nachgeschalteten Schritt des Herstellungsverfahrens ein Teil der Käfigverbindungen beladen wird.

Die folgenden Beispiele sollen der weiteren Veranschaulichung der vorliegenden Erfindung dienen.

### Beispiel 1

Grundlegende Parameter für ein Gasfiltermaterial sind hohe Luftdurchlässigkeit und mechanische Festigkeit. Die im folgenden aufgeführten Versuchsdurchführungen belegen, dass die Beaufschlagung mit unbeladene wie beladenen Cyclodextrinen bei den hergestellten Gasfilterpapieren keinen nachhaltigen Einfluß auf die genannten Eigenschaften hat.
Mit unbeladenen beta-Cyclodextrin sowie einem mit Orangen-Terpen beladenen beta- Cyclodextrin beaufschlagten Innerlinerpapiere der Flächengewichte 13 g/m², 18 g/m² und 27 g/m² wurde eine Prüfung auf Luftdurchlässigkeit sowie auf Festigkeit durchgeführt. Die beaufschlagte Menge betrug jeweils ca. 8 Gew % gemessen am Papiergewicht. Im weiteren wurden mit einer Bruchkraftmeßvorrichtung gemäß DIN EN ISO 1924- 2 die Festigkeit der behandelten und unbehandelten Filterpapiere überprüft . Ergebnisse siehe Tabelle 1.

### Beispiel 2

Ein weiterer Versuch belegt sowohl die Speicherung von Geruchsstoffen wie auch deren Abgabe.

Ein mit 8 Gew% unbeladenem beta-Cyclodextrin ausgerüstetes Papier wurde mit einer Menge von 0,5 g/m² Orangen-Terpen Papier in Form eines mit Orangenterpen gesättigten Aerosols besprüht. Zum Vergleich wurde ein Gasfilterpapier ohne Cyclodextrin Beaufschlagung besprüht.

Die Prüfung des auf diese Weise mit Orangen-Terpen beladenen Gasfilterpapiers ergab nach Begutachtung durch eine Gruppe von Fachleuten folgendes Ergebnis. Nach 2 Tagen Lagerung war das Orangen-Terpen noch in beiden mit Cyclodextrin und ohne Cyclodextrin beaufschlagten Papieren wahrnehmbar. Nach 60 Tagen war bei einer Geruchsprobe nur noch bei dem mit Cyclodextrinen beaufschlagte Papier ein Orangenterpengeruch konstatiert worden.

### zu Beispiel 1:

**Tabelle 1**

| | **Luftdurchlässigkeit (Akustrongerät), DIN EN ISO 9237** | **Bruchkraft längs DIN EN ISO 1924-2** | **Bruchkraft quer DIN EN ISO 1924-2** |
|---|---|---|---|
| **Luftfilterpapier 13 g** | | | |
| - marktüblich | > 1.500 l/m² s | > 10 N/15mm | > 5 N/15mm |
| - ohne Beaufschlagung | 2.360 l/m² s | 14,92 N/15mm | 5,80 N/15mm |
| - beaufschlagt mit unbeladenen CDs | 2.421 l/m² s | 15,10 N/15mm | 5,30 N/15mm |
| - mit beladenen CDs beaufschlagt | 2.235 l/m² s | 14,80 N/15mm | 5,36 N/15mm |

| **Luftfilterpapier 18 g** | | | |
|---|---|---|---|
| - marktüblich | > 750 l/m² s | > 13 N/15mm | > 7 N/15mm |
| - ohne Beaufschlagung | 1.130 l/m² s | 14,56 N/15mm | 8,10 N/15mm |
| - beaufschlagt mit unbeladenen CDs | 1.170 l/m² s | 14,20 N/15mm | 8.50 N/15mm |
| - mit beladenen CDs beaufschlagt | 1.065 l/m² s | 14,25 N/15mm | 8.20 N/15mm |

| **Luftfilterpapier 27 g** | | | |
|---|---|---|---|
| - marktüblich | > 650 l/m² s | >15 N/15mm | > 7 N/15mm |
| - ohne Beaufschlagung | 773 l/m² s | 16,88 N/15mm | 8,83 N/15mm |
| - beaufschlagt mit unbeladenen CDs | 760 l/m² s | 15,8 N/15mm | 9,05 N/15mm |
| - mit beladenen CDs beaufschlagt | 700 l/m² s | 16,4 N/15mm | 8,86 N/15mm |

## Patentansprüche

1. Gasfiltermaterial, das **dadurch gekennzeichnet ist, dass** es, bezogen auf das Flächengewicht des Gasfiltermaterials, 0,01 bis 60 Gew.-% makrocyclische organische Käfigverbindungen enthält.

2. Gasfiltermaterial nach Anspruch 1, wobei es sich bei den makrocyclischen organischen Käfigverbindungen um beladene und unbeladene Käfigverbindungen handelt.

3. Gasfiltermaterial nach Anspruch 1 oder 2, wobei die makrocyclischen organischen Käfigverbindungen mit Substanzen beladen sind, die aus Geruchsstoffen, Duftstoffen und Bioziden ausgewählt sind.

4. Gasfiltermaterial nach einem der vorhergehenden Ansprüche, wobei der Anteil der beladenen Käfigverbindungen 5 bis 30 %, bezogen auf die Gesamtmenge an vorhandenen Käfigverbindungen, beträgt.

5. Gasfiltermaterial nach einem der vorhergehenden Ansprüche, wobei es sich bei den makrocyclischen organischen Käfigverbindungen um Cyclodextrine und/oder Cucurbiturile handelt.

6. Gasfiltermaterial nach einem der vorhergehenden Ansprüche, wobei das Filtermaterial aus Naturfasern, Kunststofffasern oder eine Mischung dieser beiden besteht.

7. Gasfiltermaterial nach Anspruch 5, wobei die Käfigverbindungen aus alpha-, beta- oder gamma-Cyclodextrinen, bevorzugt jedoch beta-Cyclodextrine ausgewählt sind.

8. Gasfiltermaterial nach Anspruch 5, wobei die Käfigverbindungen aus Cucurbiturilen der Ringgröße 5-11, bevorzugt jedoch einer Mischung mit großen Anteilen an Cucurbit-6-uril ausgewählt sind.

9. Gasfiltermaterial nach einem der vorhergehenden Ansprüchen, das ein Flächengewicht zwischen 8 g/m² und 100 g/m² aufweist.

10. Gasfiltermaterial nach einem der vorhergehenden Ansprüche, wobei die Käfigverbindungen mit synthetischen und/oder natürlichen Duftstoffen wie Anisyl-aceton, Benzaldehyd, Terpineol (1-Methyl-4-iso-propyl-1-cyclohexen-8-ol), Terpinylacetat (Para-Ment-l-en-8-il-acetat), Ethylvanillin , wie auch ätherischen Ölen wie Citrusöl, Grapefruit-Terpene oder Orangen-Terpene beladen sind.

11. Gasfiltermaterial nach einem der vorhergehenden Ansprüche, wobei die Käfigverbindungen mit bioziden Wirkstoffen wie 5-Chloro-2-Methyl-4-isothiazolin-3-on, 2-Methyl-4-isothiazolin-3-on und/oder 5-Chlor-(2,4-dichlorophenoxy)-phenol beladen sind.

12. Verfahren zur Herstellung eines Gasfiltermaterials nach einem der Ansprüche 1 bis 11, bei dem die makrocyclischen organischen Käfigverbindungen und die Geruchsstoffe bzw. Biozide mit einem Auftragsaggregat ohne zusätzlichen Binder zusammen mit Wasser auf das Filtermaterial aufgetragen werden.

13. Verfahren zur Herstellung eines Gasfiltermaterials nach einem der Ansprüche 1 bis 7, bei dem die Cyclodextrine und die Geruchsstoffe bzw. Biozide mittels eines Strühbalkens ohne Mitverwendung von Wasser auf das Trägermaterial aufgebracht wird.

14. Verfahren zur Herstellung eines Gasfiltermaterials nach einem der Ansprüche 1 bis 11, bei dem die Käfigverbindungen der Fasermasse vor dem eigentlichen Papierprozess zugegeben werden.

15. Verfahren zur Herstellung eines Gasfiltermaterials nach einem der Ansprüche 1 bis 11, bei dem die unbeladenen Käfigverbindungen im Trockenaggregat mit Duftstoffen bzw. bioziden Wirkstoffen beladen werden.

16. Verfahren zur Herstellung eines Gasfiltermaterials nach einem der Ansprüche 1 bis 11, bei dem bei einem mit unbeladenen Käfigverbindungen beaufschlagten Gasfiltermaterial eine Beladung mit Duftstoffen oder bioziden Wirkstoffen im Anschluss an die Fertigung beispielsweise in einer Klimakammer erfolgt.

17. Verwendung von beladenen und/oder unbeladenen makrocyclischen organischen Käfigverbindungen bei der Herstellung von Gasfiltermaterialien gemäß einem der Ansprüche 1 bis 11.

18. Verwendung gemäß Anspruch 17, wobei es sich um ein Gemisch aus beladenen und unbeladenen makrocyclischen organischen Käfigverbindungen handelt.

19. Verwendung des Gasfiltermaterials **dadurch gekennzeichnet, daß** es zum Trennen und Anreichern von Substanzen eingesetzt wird.
